# EUROPEAN PATENT APPLICATION

(11) **EP 0 894 535 A1**
(43) Date of publication of application: **03.02.1999**
(21) Application number: 98114558.4
(22) Date of filing: 03.08.1998
(51) Int. Cl.: B05B 1/14, F16N 5/02

(54) **Nozzle for lubricating mechanical members**

(30) Priority: 01.08.1997 IT TO970709
(71) Applicant: FINMECCANICA S.p.A., 00195 Roma (IT)
(72) Inventor: Vicentini, Vittorio, 10020 Revigliasco (IT)
(74) Representative: Cerbaro, Elena

(57) **Abstract**

A nozzle (1) for lubricating mechanical members, the nozzle having a body (2) in turn having a main conduit (3) communicating with a lubricating fluid inlet (4), and two or more ejectors (14) for directing respective jets (g1, g2) of lubricating fluid onto the mechanical members; the ejectors communicating with the main conduit (3) via respective secondary conduits (15) so that the flow of each ejector (14) is unaffected by that of the other ejector (14).

## Description

The present invention relates to a nozzle for lubricating mechanical members.

As is known, mechanical members comprising contacting parts moving at high speed with respect to each other and subject to severe mechanical stress must be ensured continuous lubrication, which also provides for cooling.

The most effective systems, and those generally used in the aircraft industry, employ nozzles supplied with oil under pressure and having ejectors for directing oil onto the part to be lubricated/cooled.

As the purpose of the ejectors is to supply a large quantity of oil to a limited region at a given distance, the oil jet must be narrow, highly uniform and collimated, which conditions are met when flow in the ejector is laminar.

Nozzles are made of various materials and in various designs, especially as regards the ejectors, but all conform basically to a typical configuration in which the nozzle is tubular and defines an axial main conduit with one or more ejectors along or at the end of the main conduit.

The oil inlet may be axial or radial, and is normally provided with a filter for preventing clogging of the ejectors.

Known nozzles of the type briefly described above involve several drawbacks.

Over and above a given flow rate, pressure and diameter of the ejector, laminar flow gives way to turbulence, so that the jet becomes turbulent, diverges and tends to atomize.

Tests have shown that when, as is frequently the case, the nozzle comprises two (or more) closely spaced ejectors, each ejector affects and substantially destabilizes the adjacent ejector to produce the above negative effects on the jet.

It is an object of the present invention to provide a nozzle for lubricating mechanical members, designed to eliminate the aforementioned drawback.

According to the present invention, there is provided a nozzle for lubricating and cooling mechanical members, the nozzle comprising a body in turn comprising an inlet for a lubricating fluid, a main conduit, and a number of ejectors communicating with said main conduit and for directing respective jets of lubricating fluid onto said mechanical members; characterized in that said body comprises a number of secondary conduits, each interposed between said main conduit and a respective ejector, so that each ejector communicates with said main conduit via a respective said secondary conduit.

In a preferred embodiment of the present invention, the nozzle comprises a throat in series with the main conduit, so that the supply pressure of the nozzle ejectors may conveniently be reduced with respect to that of the system by appropriately calibrating the throat section.

Each ejector comprises a calibrated hole formed in the body of the nozzle and communicating with a respective secondary conduit; and possibly a tube inserted inside said hole. Conveniently, each tube is of an axial length greater than that of the respective hole, and projects axially from the hole outwards of the nozzle and/or into the respective secondary conduit to enable better flow control and enable the jet, subject to no instability phenomena, to be directed more accurately onto the lubricating area.

A preferred non-limiting embodiment of the present invention will be described by way of example with reference to the accompanying axial section.

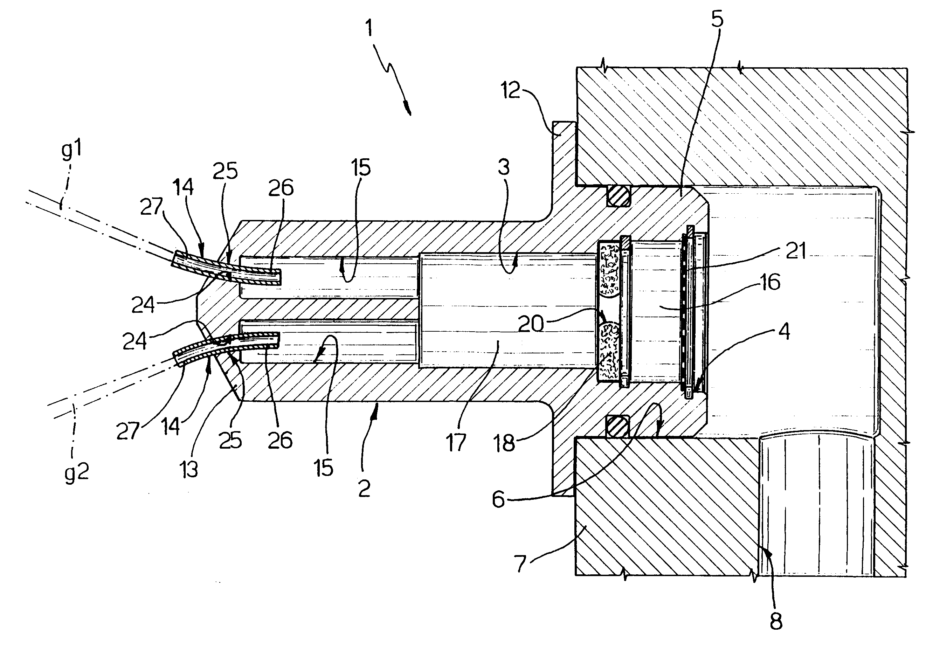

Number 1 in the accompanying drawing indicates as a whole a nozzle for lubricating/cooling mechanical members, in particular for aircraft applications.

Nozzle 1 comprises a substantially tubular body 2 in turn comprising an axial main conduit 3, and an inlet 4 formed in an end portion 5 of body 2.

In actual use, portion 5 is housed in fluidtight manner inside a respective seat 6 on a supporting structure 7 (shown partly) defined, for example, by a casing of a mechanical device of which the members to be lubricated (not shown) form part; and seat 6 communicates with an oil supply conduit 8 forming part of a lubricating circuit (not shown).

Body 2 comprises an outer flange 12 enabling fitment of the body in known manner to structure 7.

At the opposite end 13 to portion 5, body 2 comprises a number of ejectors 14 connected to main conduit 3, as described later on, and for directing respective jets g1, g2 of oil onto respective lubricating regions.

According to the present invention, body 2 comprises a number of secondary conduits 15 equal in number to ejectors 14 and extending axially from main conduit 3 towards respective ejectors 14, so that each ejector 14 communicates with main conduit 3 via a respective secondary conduit 15.

Main conduit 3 is divided into two chambers 16, 17 by a partition 18 having a calibrated hole 20, which is smaller in section than main conduit 3 and defines a throat in series with conduit 3.

Chamber 16 is adjacent to inlet 4 and communicates with the inlet via a wire mesh filter 21, while chamber 17 communicates with secondary conduits 15.

Each ejector 14 is defined by a respective calibrated hole 24 formed in body 2, and by a respective tube 25 inserted inside hole 24 and of such a length as to project axially from hole 24 with an end portion 26 projecting inside respective secondary conduit 15, and an end portion 27 projecting outwards of the nozzle. The outer end portion 27 of tube 25 may be conveniently shaped to direct the jet accurately onto the lubricating region; portion 26 is of such a length as to prevent the inlet section of tube 25 from being located in a turbulent region such as the final portion close to the dead end of respective secondary conduit 15; and portion 26 may also be so shaped as to conveniently orient the inlet section of tube 25 with respect to secondary conduit 15.

Each tube 25 conveniently has a calibrated inside diameter and a smooth inner surface.

The advantages of nozzle 1 according to the teachings of the present invention will be clear from the foregoing description.

Firstly, connecting ejectors 14 to main conduit 3 via respective secondary conduits 15 makes the flow in each ejector 14 substantially independent of that in the adjacent ejectors, thus reducing the risk of turbulence and the negative effects of this on the jets.

Secondly, throat 20 provides for disconnecting the supply pressure of ejectors 14 from that of the system, so that the operating conditions of each nozzle in the system may be varied by appropriately calibrating the throat section. In particular, ejectors 14 may be operated at low pressure even in conjunction with a high-pressure system. Throat 20 also provides for greater safety of the system in the event of failure of the nozzle.

Finally, each tube 25 provides for better directing and improving flow of the oil jet by being calibrated, by having a smooth inner surface, by being longer than conventional ejectors, by enabling appropriate shaping of the end, and by the flow conditions at the inlet of the tube being substantially undisturbed.

Clearly, changes may be made to the nozzle as described herein without, however, departing from the scope of the accompanying Claims.

In particular, filter 21 may be defined by a number of oil inlet holes into main conduit 3, the holes being smaller in diameter than ejectors 14, and the number of holes conveniently being such that the total section of the passage defined by the holes is sufficient to prevent serious localized load losses.

Alternatively, filter 21 and throat 20 may be integrated, in the sense of the throat being defined by a number of small-diameter holes also acting as a filter.

Throat 20 may even be dispensed with if nozzle 1 is capable of operating at its best at system pressure.

Filter 21 may also be dispensed with in the event the oil is filtered upstream from nozzle 1.

## Claims

1. A nozzle (1) for lubricating and cooling mechanical members, the nozzle comprising a body (2) in turn comprising an inlet (4) for a lubricating fluid, a main conduit (3), and a number of ejectors (14) communicating with said main conduit (3) and for directing respective jets (g1, g2) of lubricating fluid onto said mechanical members; characterized in that said body (2) comprises a number of secondary conduits (15), each interposed between said main conduit (3) and a respective ejector (14), so that each ejector (14) communicates with said main conduit (3) via a respective said secondary conduit (15).

2. A nozzle as claimed in Claim 1, characterized by comprising a throat (20) in series with said main conduit (3).

3. A nozzle as claimed in Claim 2, characterized in that said throat is defined by at least one hole (20) formed in an intermediate partition (18) of said main conduit (3).

4. A nozzle as claimed in any one of the foregoing Claims, characterized in that each of said ejectors (14) comprises a calibrated hole (24) formed in said body (2) and communicating with a respective said secondary conduit (15).

5. A nozzle as claimed in Claim 4, characterized in that each of said ejectors (14) comprises a tube (25) inserted inside the respective said calibrated hole (24).

6. A nozzle as claimed in Claim 5, characterized in that said tube (25) is of an axial length greater than the respective said calibrated hole (24).

7. A nozzle as claimed in Claim 6, characterized in that a first end portion (27) of said tube (25) projects axially from the respective said calibrated hole (24) and outwards of said nozzle (1).

8. A nozzle as claimed in Claim 6 or 7, characterized in that a second end portion (26) of said tube (25) projects axially from the respective said calibrated hole (24) and inwards of the respective said secondary conduit (15).
